# FASCICULE DE BREVET EUROPEEN

(11) **EP 3 097 329 B1**
(45) Date de publication et mention de la délivrance du brevet: **10.03.2021**
(21) Numéro de dépôt: 15702821.8
(22) Date de dépôt: 20.01.2015
(51) Int. Cl.: F16K 1/36, F16K 31/06

(54) **DISPOSITIF D'ÉTANCHÉITÉ, NOTAMMENT POUR UNE VANNE OU UN RACCORD**
ABDICHTUNGSVORRICHTUNG, INSBESONDERE FÜR EIN VENTIL ODER EINE KUPPLUNG
SEALING DEVICE, IN PARTICULAR FOR A VALVE OR A COUPLING

(30) Priorité: 21.01.2014 FR 1400115
(43) Date de publication de la demande: 30.11.2016
(73) Titulaire: AER, 94550 Chevilly-Larue (FR)
(72) Inventeur: COCQ, Cyril, F-94550 Chevilly-Larue (FR); BOUAS, Frederic, F-94550 Chevilly-Larue (FR)
(74) Mandataire: Touroude, Magali Linda
(86) Numéro de dépôt international: PCT/FR2015/000020
(87) Numéro de publication internationale: WO 2015/110731

(56) Documents cités:
- DE-A1- 10 258 859
- GB-A- 2 058 466
- GB-A- 2 345 120
- US-A- 6 152 421
- US-A1- 2006 137 744

## Description

La présente invention est relative à un dispositif d'étanchéité, notamment pour une vanne ou un raccord, comprenant une pièce métallique A, une pièce mixte B comprenant au moins deux pièces : une pastille en matériau non nécessairement métallique et une pièce métallique appelée clapet, et une membrane élastique à triple fonctions.

Elle concerne un dispositif d'étanchéité dans lequel l'étanchéité est réalisée par contact de deux zones d'étanchéité en matériau de nature différente, une pièce métallique et une pastille non nécessairement métallique, souple et facilement déformable.

Elle concerne particulièrement un dispositif d'étanchéité comprenant une pièce métallique A et une pièce mixte B dans lequel la zone d'étanchéité de la pièce métallique A et la zone d'étanchéité de la pièce mixte B ont des formes complémentaires de type male-femelle leur permettant de s'emboiter l'une dans l'autre pour obtenir une meilleur étanchéité.

Elle est relative à un dispositif d'étanchéité pour une vanne ou un raccord comprenant une membrane élastique assurant simultanément trois fonctions suivantes :
- l'alignement des zones d'étanchéités de la pièce métallique A et de la pièce mixte B,
- le maintien de l'étanchéité par un effort de pression exercé par la pièce B sur la pièce A et
- un retour élastique nécessaire pour rétablir l'étanchéité via une déformation de la membrane après une rupture d'étanchéité et/ou après une séparation volontaire des zones d'étanchéités des deux pièces A et B.

Elle concerne plus particulièrement un dispositif d'étanchéité comprenant une membrane élastique ayant une géométrie particulière adaptée à un effort de contact prédéfini et disposant d'une raideur axiale bien définie garantissant le contact entre la pièce métallique A et la pièce mixte B par une précharge obtenue par déformation de la membrane à l'état initial et capable de prendre en compte un phénomène de fluage et d'une raideur de rotation capable d'éviter une perte des performances d'étanchéité.

Elle concerne principalement une vanne ayant une étanchéité d'au moins 10⁻⁶ mbar.l/s, de préférence 10⁻⁸ mbar.l/s et au-delà (10⁻¹⁰ mbar.l/s).

L'invention se situe dans le domaine des vannes soumises à des environnements sévères comme par exemple l'aéronautique ou le spatial.

Il est connu de l'état de la technique une gamme de vannes de contrôle de débit, notamment pour les sous-ensembles propulsifs de satellites. Ces vannes ont souvent un design robuste et éprouvé, et permettent d'arrêter ou de modifier le débit d'un fluide liquide, gazeux, pulvérulent ou multiphasique, en milieu libre ou en milieu fermé. Elles sont utilisées notamment dans les moteurs de type apogée de satellites de télécommunications, dans la propulsion de petits satellites en orbite. C'est pour cette raison qu'elles doivent être très étanches et conçues avec une géométrie particulièrement adaptée au besoin d'utilisation. Habituellement, ces vannes présentent une étanchéité médiocre ne pouvant pas atteindre une valeur meilleure que 10⁻⁶ mbar.l/s et on peut voir apparaitre un phénomène fluage, lié à l'utilisation de matière plastique pour assurer l'étanchéité, qui influence leur performance et qualité au cours de leur vieillissement ou en cas d'aléa ou contrainte. En effet, l'étanchéité des vannes est souvent délicate en raison de leurs tailles et de leurs applications difficiles. Étant souvent des éléments cruciaux à l'exploitation et à la sécurité, les vannes ne bénéficient d'aucune marge d'erreur.

Plusieurs solutions ont été proposées dans l'état de l'art pour améliorer l'étanchéité, mais n'ont pas permis d'obtenir une étanchéité meilleure que 10⁻⁶ mbar.l/s et ne permettent pas de prendre en compte totalement le phénomène de fluage. Notamment l'utilisation d'un système de tresses comprenant une bague d'étanchéité en treillis PTFE à faible frottement sur une base graphite ou en graphite pur, et des anneaux d'étanchéité et un moyen de contrôle de pression exerçant sur le fouloir, réduisant ou éliminant les pertes de volume de tresses pour les applications hautes températures et hautes pressions tout en assurant une étanchéité de l'ordre de 10⁻⁴ mbar.l/s à 10⁻⁵ mbar.l/s; malheureusement, ces vannes, non seulement ne permettent pas d'obtenir une meilleure étanchéité que 10⁻⁶ mbar.l/s, mais n'est pas adaptée avec les environnements sévères comme l'aéronautique ou le spatial.

Des publications CN 103206319 et CN 102927336 sont connues un dispositif d'étanchéité pour une vanne permettant de garantir sa durée de vie et son bon fonctionnement, ledit dispositif comprenant un siège métallique et un clapet métallique. Malheureusement, ce dispositif ne permet pas d'obtenir un niveau d'étanchéité suffisant au bon fonctionnement d'une vanne dans un milieu complexe ou un environnement sévère et ne permet pas de prendre en compte les fluages car, l'étanchéité est obtenue par simple contact entre deux pièces métalliques de même nature, lesdites pièces n'ayant pas d'empreintes et en ce que la membrane de guidage ne permet pas d'obtenir simultanément une précharge et un retour élastique.

De la publication GB 2 058 466 est connue un dispositif d'étanchéité, notamment pour une vanne ou un raccord, comprenant deux pièces métalliques ayant chacune une zone d'étanchéité de forme relativement plate et une membrane élastique garantissant l'alignement desdites pièces métalliques et un ressort de rappel permettant. Ladite membrane est fixée sur une des pièces et sur une entretoise métallique, ladite entretoise métallique servant d'interface avec les pièces métalliques. La zone d'étanchéité desdites pièces métalliques est constituée principalement par une surface plane de forme circulaire et/ou une surface sphérique. L'étanchéité est réalisée par contact direct entre deux pièces métalliques de même nature et de forme différente. Malheureusement, ce dispositif ne permet pas d'obtenir une meilleure étanchéité que 10'⁶ mbar.l/s du fait d'absence d'empreinte sur les zones d'étanchéité. De plus le matériau constituant les zones d'étanchéité est purement métallique, non déformable et ne présente aucune flexibilité ou des propriétés physico-chimiques adéquates.

Sont également connu de l'état de la technique, les documents suivants : GB 2 345 120, DE 102 58 859, US 2006/137744, US 2003/159735. Malheureusement aucun desdits documents ne proposent une solution technique permettant d'obtenir une étanchéité meilleure que 10⁻⁶ mbar.l/s. En effet, dans l'état de la technique, l'étanchéité est toutefois obtenue par simple contact direct entre deux pièces métalliques de même nature de forme plane et sans empreinte. De plus, dans ces documents, la fonction de guidage et de ressort est réalisée par deux pièces totalement différentes, une membrane élastique et un ressort de rappel.

Le document US 6 152 421 A divulgue un dispositif d'étanchéité pour une vanne capable de résister au gaz complexe utilisé dans la production de semi-conducteur. Le dispositif comprend un axe vertical OX, un axe horizontal OY, un axe OZ, une pièce métallique ayant une zone d'étanchéité, une pièce mixte constituée d'au moins deux pièces : une pièce métallique et une pastille en Nickel recuit comprenant une zone d'étanchéité, laquelle comprend une empreinte de forme conjuguée à la forme de la zone d'étanchéité et de profondeur correspondant à la profondeur de cette zone d'étanchéité, la zone d'étanchéité et la zone d'étanchéité ont en outre des formes complémentaires de type male-femelle leur permettant de s'emboiter l'une dans l'autre pour permettre à la pastille d'épouser la surface de contact de la zone d'étanchéité .D1 comprend en outre un ressort (31) maintenu dans une position prédéterminée dans la chambre (27) par les moyens (33) et (34) pour assurer une précharge verticale suivant une seule direction (OZ), le guidage étant assuré par le piston (32) et le corps (1). Ce système est complété par un écrou de réglage (38) permet de déplacer et d'ajuster verticalement le ressort pour assurer la précharge verticale prédéterminée. Ce type de dispositif d'étanchéité n'est cependant pas adapté aux environnements sévères caractérisés par des vibrations et accélérations importantes.

La présente invention vise donc à remédier à ces inconvénients. Plus particulièrement, la présente invention vise à prévoir un dispositif d'étanchéité, notamment pour une vanne ou un raccord, ayant un design simple, robuste et éprouvé et ayant un effort de contact souhaité correspondant à son utilisation et adapté à l'étanchéité demandée tout en évitant les phénomènes de fluage.

Dans la description qui suit, les termes suivants auront la définition suivante :
- Pastille c'est une petite pièce non nécessairement métallique de forme cylindrique ou sphérique ou cubique ou parallélépipédique, aplatie.
- Forme conjuguée : deux formes sont conjuguées lorsque l'une est l'opposée de l'autre c'est-à-dire lorsqu'elles ont des formes opposées de type male-femelle leur permettant de s'emboiter l'une dans l'autre et dont les formes s'épousent l'une sur l'autre.
- Pièce mixte : c'est une pièce formée d'au moins deux éléments et/ou composée d'au moins deux éléments de matières différentes.
- Empreinte : elle désigne un marquage et/ou un motif tridimensionnel sur une surface
- Forme complémentaire : deux formes sont complémentaires lorsqu'elles sont conjuguées et s'épouse l'une sur l'autre.
- Rupture d'étanchéité : rupture du contact entre les deux zones d'étanchéité des pièces A et B sous l'effet d'un effort supérieur à l'Effort de contact prédéfini et conduisant à la perte de la performance d'étanchéité.
- Séparation volontaire : c'est une séparation intentionnelle.
- PTFE : le polytétrafluoroéthylène est un fluoropolymère issu du tétrafluoroéthylène communément appelé Téflon.
- Forme circulaire de diamètres prédéfinis : c'est une forme circulaire ayant un diamètre défini par le constructeur ou le fabricant, relatif à ses applications. Par exemple pour un débit de fluide X, le constructeur préconise une vanne d'Y millimètre (mm) de diamètre. Ce diamètre est calculé en tenant compte de la dimension de la vanne et des efforts de contact et des pertes de charge. Un moyen de calcul intégrant les différents paramètres de définition de la vanne (dimension, effort de contact, pression, etc.) permet de définir la valeur du diamètre.
- Effort de contact prédéfini: c'est la force appliquée entre deux pièces métalliques permettant de garantir le maintien de l'étanchéité du système lorsque celui-ci est soumis à la pression interne du fluide et aux efforts extérieurs (chocs et vibration). Cet effort est obtenu par la précharge de la membrane
- Précharge de la membrane: effort résultant de la déformation élastique de la membrane à l'état initial. La membrane est déformée d'un angle ALFA et d'une hauteur DE permettant d'obtenir un effort de retour élastique correspondant à l'effort de contact prédéfini.
- L'état initial : c'est un pseudo-état qui indique l'endroit de départ par défaut d'un système physique.
- Étanchéité : elle décrit les moyens mis en oeuvre pour s'assurer qu'il n'y a aucun échange de matière, notamment liquide ou gazeuse entre l'intérieur et l'extérieur d'un organe, notamment une vanne. L'étanchéité peut être quantifiée en testant le flux de fuite d'un gaz, appelé traceur (généralement de l'hélium), entre l'extérieur et l'intérieur de l'organe testé. Une meilleure étanchéité peut être définie par un flux de fuite à l'hélium strictement inférieur à 10-6 mbar. 1/s (millibar-litre par seconde), de préférence 10-8 mbar. 1/s et au-delà.
- Phénomène de fluage : c'est un phénomène physique qui provoque la déformation irréversible dans le temps, c'est à dire non instantanée, d'un matériau soumis à une contrainte constante et inférieure à la limite d'élasticité des matériaux, pendant une durée suffisante.
- Performances d'étanchéité : c'est la capacité d'un système ou d'un dispositif à obtenir une meilleure étanchéité prédéfinie correspondant à un effort de contact prédéfini et à une précharge prédéfinie, tout en tenant compte des phénomènes de fluage. Les performances d'étanchéité sont définies en fonction de la nature et de la destination du dispositif. Par exemple, pour une vanne, une meilleure étanchéité est prédéfinie dans la gamme comprise entre 10-6 mbar. 1/s et 10-10 mbar. 1/s et pour un effort de contact équivalent à la précharge.
- Ajoure : c'est un découpage permettant d'obtenir un pourtour défini selon une forme et/ou un motif et des cotes précises.
- Contraintes de performances : ce sont les contraintes susceptibles de brider et/ou de modifier et/ou d'influencer les performances d'étanchéités. Il s'agit des contraintes ayant un effet négatif sur la valeur de l'étanchéité, de l'effort de contact, de la précharge et aux phénomènes de fluage.
- Déplacement : c'est la mobilité (la capacité d'un élément à se déplacer d'un point à un autre).

L'invention a pour objet un dispositif d'étanchéité pour une vanne spatial ou un raccord utilisé dans l'aéronautique ou l'Aerospace, comprenant un axe vertical OX, un axe horizontal OY, un axe OZ, une première pièce métallique (A) ayant une première zone d'étanchéité (10) laquelle a une profondeur (PA), une pièce mixte (B) constituée d'au moins deux pièces:
- une deuxième pièce métallique (4) et
- une pastille (5) en PTFE comprenant une deuxième zone d'étanchéité (7), laquelle comprend une empreinte de forme conjuguée à la forme de la première zone d'étanchéité (10) et de profondeur correspondant à celle de la deuxième zone d'étanchéité (10),
la première zone d'étanchéité (10) et la deuxième zone d'étanchéité (7) ont des formes complémentaires de type male-femelle leur permettant de s'emboiter l'une dans l'autre pour permettre à la pastille (5) d'épouser parfaitement la surface de contact de la première zone d'étanchéité (10), caractérisé en ce que :
- la première zone d'étanchéité (10) est constituée par une surface plane (2) de largeur (LP) et d'au moins deux congés (3) de rayon R1 et R2,
- la pastille (5) est maintenue sur la pièce métallique (4) par une bague métallique (6) pour limiter la mobilité de la dite pastille (5) et pour maintenir ladite pastille (5) quasiment stable sous l'effet des contraintes mécanique et/ou vibratoire, et
ledit dispositif comprend en outre au moins une membrane élastique (8) à triple fonction, ladite membrane élastique (8) étant pré-déformée élastiquement à l'état initial car elle est montée sur une entretoise (9) avec un angle (ALFA) de sorte que le point de fixation de ladite membrane sur ladite deuxième pièce métallique (4) soit à une hauteur (DE) permettant d'obtenir une précharge (P) résultant de la déformation provoquée par un déplacement de la membrane (8) de ladite hauteur (DE) suivant l'axe OX et dudit angle (ALFA) inférieur à 60 degrés, ladite précharge (P) étant proportionnelle audit angle (ALFA) entre la première pièce métallique (A) et la pièce mixte (B) et supérieure ou égale à un effort de contact (EC) correspondant à la somme des efforts extérieures susceptibles de rompre l'étanchéité et/ou de séparer accidentellement lesdites zones d'étanchéités (7) et (10) des pièces (A) et (B) respectivement.

Selon d'autres caractéristiques de l'invention, la membrane est constituée par une feuille mince plane et circulaire d'épaisseur comprise entre 0,01 mm et 2 mm, ladite feuille mince comprenant des ajoures symétriques et/ou asymétrique par rapport à l'axe OX et/ou OY, et/ou autour de l'axe OX et/ou OY, et/ou concentriques selon au moins un motif (12) prédéterminé par les contraintes de performance du dispositif.

Avantageusement, l'empreinte de la zone d'étanchéité a une profondeur comprise entre 0.005 mm et 2 mm.

La combinaison des caractéristiques techniques de la présente invention présente un effet de synergie inattendu permettant d'atteindre simultanément les effets techniques suivants, sans que cette liste soit exhaustive :
- obtenir une valeur d'étanchéité meilleure que celle d'un dispositif d'étanchéité ordinaire ou existant, c'est-à-dire une étanchéité meilleure que 10⁻⁶ mbar.l/s, de préférence 10⁻⁷ mbar.l/s tout en tenant compte des fluages.
- obtenir une meilleure étanchéité à partir deux pièces conjuguées en vis-à-vis de nature différente, l'une étant en matériau non métallique et l'autre matériau métallique.
- Maintenir stable la pastille à partir d'une bague métallique pour obtenir une étanchéité meilleure que 10⁻⁶ mbar.l/s, de préférence 10⁻⁷ mbar.l/s.
- Maintenir stable deux pièces métalliques A et B exerçant un effort de contact et guider lesdites pièces métalliques A et B, pour réaliser une étanchéité meilleure que 10⁻⁶ mbar.l/s, de préférence 10⁻⁷ mbar.l/s.
- Utiliser une seule et unique membrane élastique à triple fonctions pour simplifier le dispositif d'étanchéité tout en améliorant l'étanchéité.
- Rompre l'étanchéité par déformation volontaire de la membrane ou par application d'un effort supérieur à la force de précharge par un moyen extérieur à l'invention.

D'autres caractéristiques et avantages de l'invention, pris seul ou en combinaison, apparaitront à la lecture de la description détaillée qui suit pour la compréhension de laquelle on se rapportera aux dessins annexés dans lesquels :
- la figure 1 est un schéma du dispositif d'étanchéité selon l'invention ;
- la figure 2 est un schéma représentant un exemple d'une pièce du dispositif d'étanchéité selon l'invention ;
- la figure 3 est un schéma représentant un exemple de la zone d'étanchéité d'une pièce du dispositif d'étanchéité selon l'invention ;
- la figure 4 est un schéma représentant un exemple de la membrane élastique du dispositif d'étanchéité selon l'invention.
- La figure 5 est un schéma représentant un exemple d'assemblage avec une précharge du dispositif d'étanchéité selon l'invention.

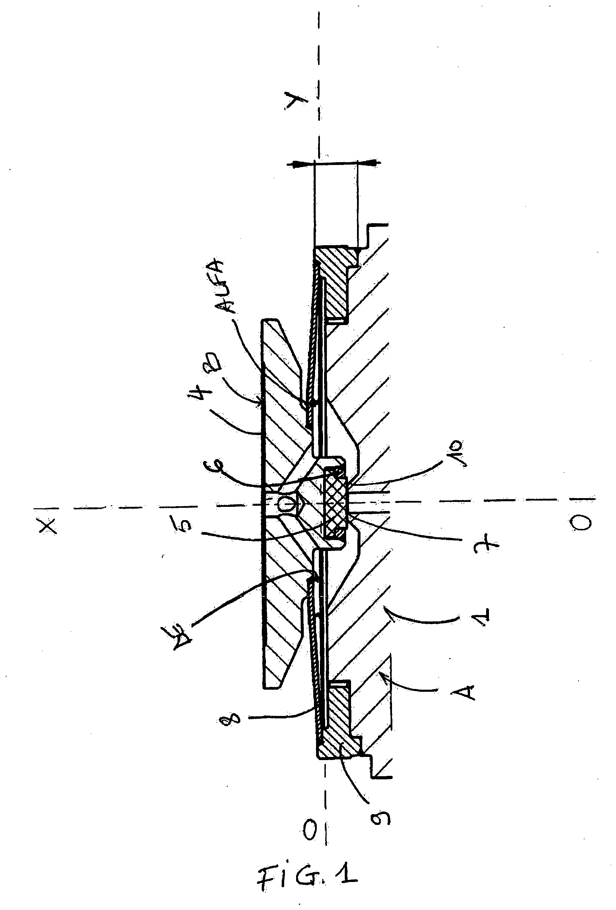

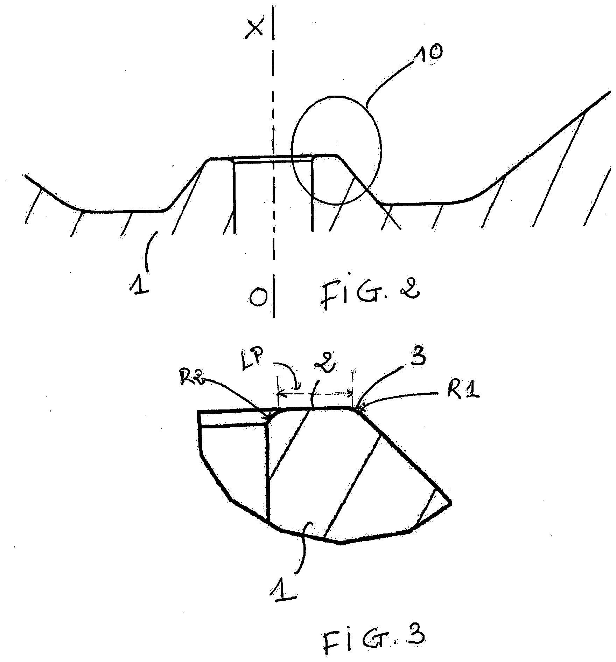

En référence aux figures 1, 2, 3, 4 et 5, le dispositif d'étanchéité pour une vanne comprend un axe vertical OX et un axe horizontal OY, une pièce métallique A, une pièce B et une membrane (8) garantissant, mais pas exclusivement, l'alignement de la pièce métallique A et de la pièce B. Le dispositif comprend également un axe OZ non représenté sur les figures. Les axes OX, OY, OZ définissent un repère orthonormé du dispositif selon l'invention. La membrane (8) est fixée sur la pièce B et sur une entretoise métallique (9), lesquelles servent d'interface avec la pièce métallique A et la pièce B.

La pièce métallique A a une zone d'étanchéité (10) et la pièce B a une zone d'étanchéité (7). La zone d'étanchéité (10) de la pièce métallique A est constituée par au moins une surface plane (2) de largeur LP et d'au moins deux congés (3) de rayon R1 et R2. La surface plane (2) de ladite zone d'étanchéité (10) de la pièce métallique A a une forme circulaire de diamètre intérieur DP1 et extérieur DP2 prédéfinies. Cette forme de la zone d'étanchéité (10) est définie en fonction d'un débit de fluide à passer et d'une performance d'étanchéité prédéfinie.

La pièce B est une pièce mixte, c'est-à-dire, qu'elle est constitué par la combinaison et notamment de l'articulation, d'au moins deux pièces : une pièce métallique (4) et une pastille (5) laquelle comprend la zone d'étanchéité (7) de la pièce B. Cette zone d'étanchéité (7) de la pièce B, située sur la pastille (5), comprend une empreinte dont la forme correspond à la forme conjuguée de la zone d'étanchéité (10) de la pièce A. La profondeur de la dite empreinte de la zone d'étanchéité (7) de la pièce B correspond à celle de la zone d'étanchéité (10) de la pièce A noté PA.

La zone d'étanchéité (10) de la pièce métallique A et la zone d'étanchéité (7) de la pièce B sont conçues avec des formes complémentaires de type male-femelle leur permettant de s'emboiter l'une dans l'autre de sorte que la pastille (5) épouse parfaitement la surface de contact de la zone d'étanchéité (10) de la pièce métallique A.

La pastille (5) est une pièce non métallique, facilement déformable de manière à obtenir sur la zone d'étanchéité (7) de la pièce B une empreinte conjuguée de la forme géométrique de la zone d'étanchéité (10).

Avantageusement, la pastille (5) est conçue avec des matériaux présentant des propriétés remarquables notamment une excellentes résistante thermique et chimique ainsi qu'un coefficient de frottement extrêmement faible. De préférence; le matériau constituant la pastille (5) est thermostable, possède une grande inertie chimique et un très grand pouvoir antiadhésif.

Avantageusement, la pastille (5) est en matériau tendre, facilement déformable. Sa résistance aux contraintes est faible. Elle présente une remarquable résistance à la plupart des produits chimiques, un coefficient de frottement extrêmement faible et reste stable à température élevée, notamment jusqu'à 600 K. Ces propriétés confèrent à la pastille (5) une valeur inestimable en matière d'étanchéité.

La pastille (5) est principalement une petite pièce non métallique de forme cylindrique ou ronde, aplatie. Plus principalement, la pastille (5) est en PTFE. Ce matériau est choisi en ce qu'il répond au critère précédemment énuméré et permet d'obtenir les performances attendues en termes d'étanchéité, c'est-à-dire une étanchéité meilleure que 10⁻⁶ mbar.l/s.

La pastille (5) est maintenue sur la pièce métallique (4) par une bague métallique (6) pour limiter sa mobilité et de façon à ce qu'elle reste quasiment stable sous l'effet de toutes sortes de contraintes notamment mécaniques et/ou vibratoires.

Avantageusement, la pièce métallique A est un siège métallique (1) et la pièce métallique (4) de la pièce B est un clapet (4).

Pour réduire le nombre de pièce constituant le dispositif d'étanchéité selon l'invention et le rendre plus simple, la membrane (8) est une membrane élastique à triple fonction, c'est-à-dire, elle assure simultanément trois fonctions techniques différentes :
- une fonction d'alignement des zones d'étanchéités (7) de la pièce B avec celle de la zone d'étanchéité (10) de la pièce métallique A, et éventuellement des pièces A et B,
- une fonction de maintien de l'étanchéité par un effort de pression exercé par la pièce mixte B sur la pièce métallique A et,
- une fonction de retour élastique (effort de rappel) nécessaire pour rétablir l'étanchéité après une déformation de ladite membrane (8) lors d'une rupture de l'étanchéité et/ou d'une séparation volontaire des zones d'étanchéités (7) et (10) et/ou des pièces A et B.

Cette simplification permet de réduire considérablement le nombre de pièce mécanique nécessaire au guidage, au maintien de l'étanchéité et au retour élastique en centralisant toutes ces fonctions technique sur un seul élément. En effet, dans l'état de la technique, ces trois fonctions sont assurées par trois pièces mécaniques différentes. Cette simplification permet donc de diminuer le coût de la fabrication d'un tel dispositif d'étanchéité et de garantir le résultat, c'est-à-dire obtenir une étanchéité meilleure que 10⁻⁶ mbar.l/s et au délà.

Pour remplir les trois fonctions précitées, la membrane (8) est conçue avec des matériaux présentant des propriétés élastiques remarquables en termes d'élasticité et de résistance mécanique au choc et aux vibrations. Ces matériaux, compte tenu de leur propriétés mécaniques et notamment élastiques remarquable, sont capables de se déformer et de générer un effort de rappel R supérieur ou égal à un effort F de rupture d'étanchéité et/ou de séparation volontaire des zones d'étanchéité (7) et (10) et/ou des pièces A et B. Ils sont aussi capables de retrouver leur forme et taille initiales après avoir été déformé par des efforts mécaniques et/ou vibratoires appliqués aux pièces A et/ou B, notamment la traction-compression et cisaillement. Ils possèdent donc des propriétés de déformation réversible. De préférence, la membrane élastique (8) est en acier inoxydable, notamment l'acier 17-7PH.

Compte contenu de l'intérêt de cette membrane élastique (8) dans la conception du dispositif d'étanchéité selon l'invention, la géométrie de cette membrane (8) est particulière, hors du commun. Cette géométrie est définie pour générer une précharge P proportionnel à un angle ALFA entre la pièce métallique A et ladite membrane élastique (8), et ceci pour éviter toute fracture et/ou tout fluage susceptible d'intervenir et ainsi d'influencer les performances attendues en termes d'étanchéités. Cette précharge est supérieure ou égale à un effort de contact EC correspondant à la somme des efforts extérieures susceptibles de rompre l'étanchéité et/ou de séparer accidentellement les zones d'étanchéités (7) et (10) et/ou les pièces A et B. L'angle ALFA permet de définir la précharge P et donc une déformation de la membrane élastique (8). C'est principalement l'angle formé entre la pièce métallique A et la membrane élastique (8).

Dans le cas particulier où le dispositif d'étanchéité selon l'invention est monté dans une vanne ou un raccord, le débit du fluide à passer est prédéfini en fonction de la nature et de l'utilisation et/ou de la destination de la vanne ou du raccord.

Les diamètres DP1 et DP2 de la zone d'étanchéité (10) de la pièce métallique A peuvent varier de quelques dixièmes de millimètres à quelques centimètres. Par exemple pour une vanne ou un raccord, un moyen de calcul approprié permet de calculer et notamment d'estimer les valeurs des diamètres DP1 et DP2 en intégrant plusieurs paramètres de définition et de performance de la vanne ou raccord à fabriquer, notamment la nature de l'utilisation, la destination et l'environnement de montage et de fonctionnement, les performances d'étanchéité, le vieillissement, les dimensions microscopiques ou macroscopiques de la vanne. Les diamètres DP1 et DP2 peuvent aussi être choisis uniquement en fonction de l'application et de la dimension de la vanne.

Avantageusement, le clapet est uniquement formé par la pièce métallique (4) de la pièce mixte B. La pastille (5) en PTFE est maintenue principalement par une bague métallique (6) et n'est pas fixée sur le clapet (4) par un moyen mécanique (vis ou écrous). La zone d'étanchéité (7) de ladite pastille comprend une empreinte. Cette empreinte de la zone d'étanchéité (7) de la pastille (5) (de la pièce mixte B) et celle de la zone d'étanchéité (10) de la pièce métallique A sont ajustées de sorte que la zone d'étanchéité (10) de la pièce métallique A s'emboite dans la zone d'étanchéité (7) de la pièce B ou inversement. La zone d'étanchéité (10) de la pièce métallique A, par son empreinte, constitue la partie intérieure contenue c'est-à-dire la pièce mâle et la zone d'étanchéité (7) de la pièce mixte B (la pastille (7)), par son empreinte, constitue la partie extérieure contenante c'est-à-dire la pièce femelle. Ces zones d'étanchéité (7) et (10) de la pièce métallique A et de la pièce mixte A, ont la même dimension.

La profondeur de l'empreinte de la zone d'étanchéité (7) de la pièce mixte B est conditionnée par la zone d'étanchéité (10) de la pièce métallique A. En effet, l'étanchéité est obtenue lorsque l'empreinte de la zone d'étanchéité (7) de la pièce mixte B est en contact avec la zone d'étanchéité

(10) de la pièce métallique A, c'est-à-dire les deux zones d'étanchéité (7) et (10) s'emboîtent l'une dans l'autre car elles ont des formes complémentaires, c'est-à-dire conjuguées. L'ajustement des zones d'étanchéité (7) et (10) est parfait

D'après l'invention, l'ajustement des zones d'étanchéités (7) et (10) est de type unitaire car les zones d'étanchéité (7) et (10) sont considérées comme des pièces unitaires en ce que l'étanchéité est réalisée principalement par le contact desdites zones d'étanchéité. Ceci permet d'éviter le coinçage et d'améliorer le guidage de la pièce A sur la pièce B et notamment l'étanchéité.

De préférence, le jeu mécanique est tel que l'empreinte de la zone d'étanchéité (7) définissant la pièce contenant est dans l'absolu identique à la géométrie de la zone d'étanchéité (10) définissant la pièce contenue.

Avantageusement, la profondeur de l'empreinte, c'est-à-dire des marques et/ou traces sur les zones d'étanchéité (7) et/ou la profondeur PA de la zone d'étanchéité (10) est au moins égale à 0,005 mm et au plus égale à 2 mm.

La membrane élastique (8) est principalement placée entre le siège métallique (1) (la pièce métallique A) et le clapet (4) (la pièce métallique de la pièce mixte B). Cette membrane élastique (8) est particulièrement fixée sur le clapet (4), notamment par au moins des moyens de fixations et au moins sur une entretoise métallique (9) servant d'interface avec le siège métallique (1) pour garantir un meilleur alignement entre l'empreinte de la zone d'étanchéité (7) de la pastille (5) et la zone d'étanchéité (10) du siège métallique (1); ceci, pour obtenir une performance d'étanchéité prédéfinie (une valeur d'étanchéité de quelques 10⁻⁶ mbar.l/s). Ladite membrane élastique (8) a en outre une géométrie particulière, adaptée à un effort de contact EC prédéfini entre le clapet (4) et le siège métallique (1) de façon à prendre en compte tout phénomène de fluage et à garantir le contact sous charge entre le siège (1) et la pastille (5).

D'après l'invention, la membrane élastique (8) est pré-déformée élastiquement à l'état initial car elle est montée sur l'entretoise métallique (9) avec un angle ALFA de sorte que le point de fixation de ladite membrane sur le clapet (4) soit à une hauteur DE. Ce qui permet d'obtenir une précharge P. On comprend aisément que la précharge P, est obtenue à l'état initial, résulte directement de la déformation de la membrane élastique (8), ladite déformation étant définie par la hauteur DE et l'angle de déformation ALFA. De préférence, l'angle ALFA est inférieur à 60 degrés ; ceci pour éviter que l'effort de contact EC, correspondant à la somme des efforts extérieurs susceptibles de rompre l'étanchéité et/ou de séparer accidentellement les zones d'étanchéité (7) et (10) et/ou les pièces A et B soient toujours inférieures ou égales à la précharge P. On comprend effectivement que la précharge P est directement proportionnelle à l'angle ALFA.

Avantageusement, la précharge (P) est au moins supérieure à l'effort de contact EC prédéfinis: P = EC. De cette façon, les performances d'étanchéité prédéfinies correspondant à la nature d'utilisation, au niveau d'étanchéité et à la destination du dispositif, sont satisfaites.

La membrane élastique (8) dispose d'une raideur axiale suivant l'axe OX et/ou OY et/ou OZ et d'une raideur de rotation autour de l'axe OX et/ou OY et/ou OZ pour garantir le contact entre le siège et le clapet. Ces dites raideurs axiales et de rotation sont également capables de prendre en compte et/ou d'éviter un phénomène de fluage. Ce qui permet d'éviter toutes pertes de performances d'étanchéité prédéfinies dans le temps.

La raideur axiale et de rotation sont des caractéristiques essentielles à la membrane élastique (8) qui indiquent sa résistance à la déformation élastique sous l'effet des contraintes (efforts) axiales ou rotationnelles. Ces raideurs sont définies par deux données principales : l'amplitude et les efforts extérieurs EC nécessaires pour la réalisation d'une meilleure étanchéité. C'est donc une propriété intensive propre à la membrane élastique (8).

La raideur axiale résulte d'une relation de proportionnalité entre les efforts appliqués en un point sur la pièce métallique A et/ou sur la pièce mixte B et la déflexion résultante en ce point suivant une direction, notamment l'axe OX et/ou OY et/OZ. La raideur de rotation encore appelée raideur angulaire résulte d'une relation de proportionnalité entre les moments des efforts appliquées en un point sur la pièce métallique A et/ou la pièce mixte B et l'angle de rotation induit résultante en ce point autour notamment de l'axe OX et/ou OY et/ou OZ. La membrane élastique (8) a une raideur angulaire en rotation et/ou en flexion, a en outre une raideur axiale en traction-compression, en flexion et/ou en cisaillement. Ces raideurs angulaires et axiales sont adaptées pour garantir un contact entre les zones d'étanchéité (7) et (10) et prendre en compte tout fluage pour éviter toute perte d'étanchéité.

Selon d'autres caractéristiques, la raideur de rotation est couplée à la raideur axiale de sorte que la membrane élastique (8) soit capable de se déformer et de générer au mieux un effort de rappel R supérieur ou égal à un effort F de rupture d'étanchéité et/ou de séparation volontaire des zones d'étanchéité (7) et (10). Ce couplage permet également de réduire le nombre d'élément constituant le dispositif d'étanchéité selon l'invention.

Pour obtenir une géométrie de la membrane adaptée et capable pour générer une précharge P proportionnelle à l'angle ALFA et supérieure ou égal à l'effort EC, la membrane élastique (8) est un disque dans lequel plusieurs découpes géométriques particulières sont faites afin de donner à cette membrane élastique une raideur axiale suivant l'axe OX et/ou OY et/ou OZ et une raideur angulaire autour de l'axe OX et/ou OY et/ou OZ. Ce disque est non nécessairement métallique, flexible, possédant de très bonnes propriétés élastiques.

Avantageusement, la membrane élastique (8) est principalement une feuille mince plane et circulaire, flexible, métallique ou non métallique ou encore en matériau composite. Elle comprend des ajoures symétriques et/ou asymétrique par rapport à l'axe OX et/ou l'axe OY ou autour de l'axe OX. Et/ou OY

Avantageusement, ces ajoures sont concentriques selon un motif (12) prédéterminé par les contraintes de performance du dispositif selon l'invention.

Avantageusement, la géométrie de la membrane (8) est définie en fonction de la destination et de l'utilisation du dispositif selon l'invention. Un moyen de calcul développé, intégrant les différents paramètres de performance du dispositif de destination (par exemple une vanne), notamment la forme (cylindrique par exemple), nature de l'étanchéité, le phénomène de fluage, l'effort de contact et la précharge, permet de calculer la forme géométrique particulière et la structure de la membrane élastique (8).

Selon d'autres caractéristiques de l'invention, avant déformation par la précharge, c'est-à-dire à l'état initial, la membrane élastique (8) est une surface plane (11) circulaire comprenant des ajourages symétriques ou asymétriques par rapport à l'axe OX et/ou OY ou autour de l'axe OX, et/ou concentriques selon au moins un motif (12, 13) prédéterminé par les contraintes de performance du dispositif.

Avantageusement, la membrane élastique (8) est une tôle, comprenant une surface plane (11) circulaire, creuse, concentrique ou coaxiale comprenant des découpes, notamment des ajourages (13) aux motifs (12) géométriques prédéfinis et uniques, et ayant une répartition symétrique permettant de régler finement les propriétés mécaniques de la membrane notamment, les raideurs, les déplacements et/ou les efforts. Un exemple de motifs (12) géométriques particuliers, prédéfinis de la membrane élastique (8), est en ce que les motifs (12) sont des arcades en qualité contournée, symétrique par rapport à l'axe OX.

Avantageusement, ces motifs ont des géométries uniques variant pour chaque réglage d'effort de contact et des raideurs de ladite membrane élastique (8). Ces motifs (12) et/ou les ajoures (13) ont une forme générale proche de l'entrelacement et/ou de serpentin inscrit dans des cercles et sans aucun angle vif afin de ne pas générer de concentration de contraintes pouvant provoquer des amorces de rupture. Par exemple, la membrane élastique (8) comprend au moins des motifs (12), laquelle à la forme de serpentin, c'est-à-dire les motifs (12) ont la forme d'un serpent enroulée sur elle-même.

Selon d'autres caractéristiques de l'invention, la membrane comprend plusieurs motifs (12). Ces motifs (12) peuvent être séparés et/ou alternés, notamment une à une et/ou deux à deux et/ou quatre à quatre, par d'autres motifs de même nature ou de nature différents.

Avantageusement, la surface plane (11) peut être traitée en repoussé du bord de la surface plane (11) d'au moins deux motifs (12) symétriques et/ou asymétriques, par exemple, au moins deux arcades alternées et/ou ornées des ajoures.

Ces différentes géométries particulières et adaptées à la membrane élastique (8) précédemment détaillées, sont particulièrement adaptées à une déformation prédéfinie associée à une précharge permettant l'obtention d'un effort de contact prédéfini, notamment par les contraintes d'utilisation de la vanne, entre le clapet (4) et le siège (1). Elles sont principalement adaptées à un effort de contact EC prédéfini d'au moins 0.2N correspondant à l'effort minimum pour garantir la performance d'étanchéité auquel vient s'ajouter un effort de contact supplémentaire permettant de compenser les forces extérieures auquel le produit est soumis (choc, vibration, etc.) et permettant de garantir le maintien du contact dans l'environnement spécifié.

D'autres formes de motifs, définissant la géométrie particulière de la membrane élastique (8), peuvent être adaptés, mais ne sont pas détaillé dans l'invention et l'homme du métier saura y apporter toutes variantes conforme à la présente invention.

L'effort de contact EC se détermine aisément en effectuant l'équilibre de l'ensemble des moments et des forces, notamment axiales et angulaire. L'effort de contact peut être obtenu par la précharge prédéfinie de la membrane.

Selon d'autres caractéristiques de l'invention, la membrane élastique (8) a une faible épaisseur, de quelques dizaines de microns à quelques millimètres.

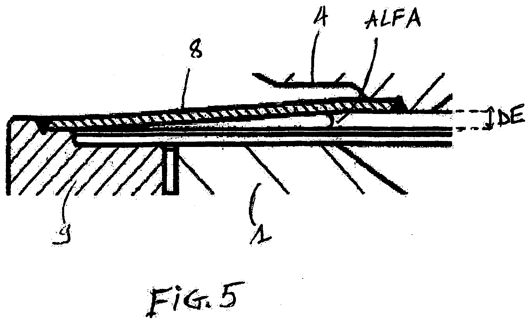

En référence à la figure 5, pour garantir un contact intime entre le clapet (4) et le siège métallique (1), la membrane élastique (8) est assemblée avec une précharge provoquée par la déformation définie par une hauteur de déformation DE et un angle ALFA inférieur à 60 degrés de façon à obtenir un effort de contact prédéfini et une étanchéité meilleure que 10⁻⁶ mbar.l/s, de préférence 10⁻⁷ mbar.l/s et au-delà.

Avantageusement, pour garantir le contact entre la pièce B et le siège métallique (1), la membrane élastique (8) est déformée dans son état initial d'un angle ALFA inférieur à 60 degrés. Cet angle ALFA peut varier en fonction de la hauteur DE entre l'entretoise métallique (9) le clapet (4).

Selon l'invention, la rupture de l'étanchéité est assurée par un déplacement soit du siège (1) soit du clapet (4), l'un ou l'autre étant fixe. Ce déplacement est assuré par un effort supérieur à l'effort de contact prédéfini EC.

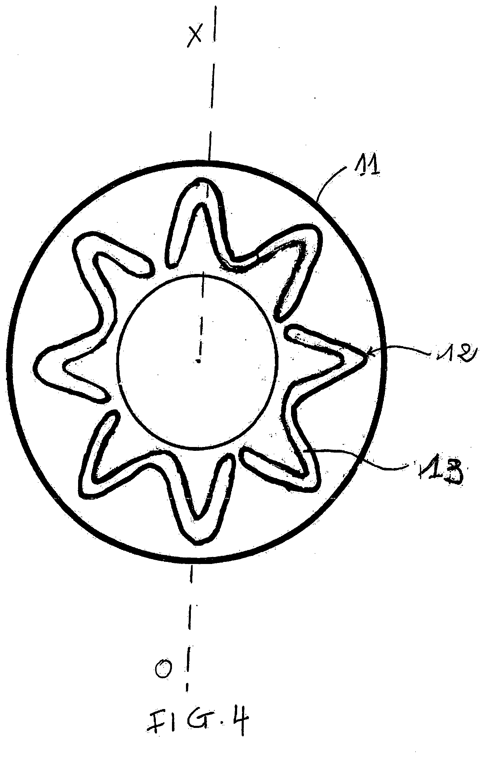

En référence à la figure 4, les zones d'étanchéités (10) du siège et de la pastille (5) ont des formes conjuguées en vis-à-vis, ce qui permet d'améliorer les performances d'étanchéité, notamment d'obtenir une étanchéité meilleure que 10⁻⁶ mbar.l/s, de préférence 10⁻⁷ mbar.l/s et au-delà.

Le-dispositif d'étanchéité selon l'invention-peut-être-utilisé pour assurer l'étanchéité d'une vanne spatiale ou d'un raccord utilisé dans des environnements sévères comme l'aéronautique ou l'Aerospace.

Le dispositif d'étanchéité selon l'invention dispose d'une innovation lui permettant d'améliorer sa fiabilité en matière d'étanchéité et d'accroitre sa durée de vie par la prise en compte du fluage et la réduction de nombre d'élément le constituant. Le dispositif repose sur le faible module d'Young de la pastille (5) qui permet d'obtenir des déformations élastiques suffisamment importantes pour compenser les imperfections d'usinage, notamment la forme et l'état d'usinage de la pièce métallique A. Elle dispose d'une meilleure étanchéité, résultant de la géométrie particulière de la membrane (8) adaptée à un effort de contact EC prédéfini entre la pièce métallique (4) et la pièce métallique A.

On voit donc qu'il est possible de réaliser industriellement, un dispositif d'étanchéité, notamment pour une vanne ou un raccord avec une étanchéité meilleure que 10"6 mbar.1/s, de préférence 10⁻⁷ mbar.1/s et au-delà et permettant de prendre en compte tous phénomènes de fluage.

Contrairement aux préjugés qui consistaient à croire qu'il est impossible de concevoir et fabriquer un dispositif d'étanchéité, notamment pour une vanne, ayant une étanchéité meilleure que 10⁻⁶ mbar.l/s, de préférence 10⁻⁷ mbar.l/s et au-delà et permettant de palier les phénomènes de fluage, l'invention présentée ci-dessus permet de montrer qu'en concevant et qu'en fabriquant un dispositif d'étanchéité décrit selon l'invention, il est possible de lever un certain nombre de verrous technologique relative à l'obtention d'une meilleure étanchéité par un disposition d'étanchéité simplifié et de résoudre le problème technique objet de la présente invention.

## Revendications

1. Dispositif d'étanchéité pour une vanne spatial ou un raccord utilisé dans l'aéronautique ou l'Aerospace, comprenant un axe vertical (OX), un axe horizontal (OY), un axe (OZ), une première pièce métallique (A) ayant une première zone d'étanchéité (10) laquelle a une profondeur (PA), une pièce mixte (B) constituée d'au moins deux pièces :
- une deuxième pièce métallique (4) et
- une pastille (5) en PTFE comprenant une deuxième zone d'étanchéité (7), laquelle comprend une empreinte de forme conjuguée à la forme de la première zone d'étanchéité (10) et de profondeur correspondant à celle de la première zone d'étanchéité (10),
la première zone d'étanchéité (10) et la deuxième zone d'étanchéité (7) ont des formes complémentaires de type male-femelle leur permettant de s'emboiter l'une dans l'autre pour permettre à la pastille (5) d'épouser parfaitement la surface de contact de la première zone d'étanchéité (10), **caractérisé en ce que** :
- la première zone d'étanchéité (10) est constituée par une surface plane (2) de largeur (LP) et d'au moins deux congés (3) de rayon R1 et R2,
- la pastille (5) est maintenue sur la pièce métallique (4) par une bague métallique (6) pour limiter la mobilité de la dite pastille (5) et pour maintenir ladite pastille (5) quasiment stable sous l'effet des contraintes mécanique et/ou vibratoire, et
- ledit dispositif comprend en outre au moins une membrane élastique (8) à triple fonction, ladite membrane élastique (8) étant pré-déformée élastiquement à l'état initial car elle est montée sur une entretoise métallique (9) avec un angle (ALFA) de sorte que le point de fixation de ladite membrane sur ladite deuxième pièce métallique (4) soit à une hauteur (DE) permettant d'obtenir une précharge (P) résultant de la déformation provoquée par un déplacement de la membrane (8) de ladite hauteur (DE) suivant l'axe vertical (OX) et dudit angle (ALFA) inférieur à 60 degrés, ladite précharge (P) étant proportionnelle audit angle (ALFA) entre la première pièce métallique (A) et la pièce mixte (B) et supérieure ou égale à un effort de contact (EC) correspondant à la somme des efforts extérieures susceptibles de rompre l'étanchéité et/ou de séparer accidentellement lesdites zones d'étanchéités (7) et (10) des pièces (A) et (B) respectivement.

2. Dispositif d'étanchéité selon la revendication 1 **caractérisé en ce que** la membrane élastique (8) à triple fonction est une feuille mince plane et circulaire d'épaisseur comprise entre 0,01 mm et 2 mm, flexible, métallique ou non métallique ou en matériau composite, comprenant des ajoures symétriques et/ou asymétrique par rapport à l'axe vertical (OX) et/ou l'axe horizontal (OY) ou autour de l'axe vertical (OX) et/ou horizontal (OY) selon au moins un motif (12, 13) prédéterminé par les contraintes de performance du dispositif.

3. Dispositif d'étanchéité selon l'une quelconque des revendications précédentes **caractérisé en ce que** l'empreinte de la zone d'étanchéité (7) et/ou la profondeur de la zone d'étanchéité (10) est comprise entre 0.005 mm et 2 mm.

## Patentansprüche

1. Dichtungsvorrichtung für ein Raumventil oder einen Anschluss, der in der Luft- oder Raumfahrt verwendet wird, umfassend eine vertikale Achse (OX), eine horizontale Achse (OY), eine Achse (OZ), ein erstes Metallteil (A) mit einem ersten Dichtungsbereich (10), der eine Tiefe (PA) aufweist, ein aus mindestens zwei Teilen bestehendes Mischteil (B):
- ein zweites Metallteil (4) und
- eine PTFE-Tablette (5) mit einem zweiten Dichtungsbereich (7), der eine der Form des ersten Dichtungsbereichs (10) entsprechende formangepasste Einprägung und eine der Tiefe des ersten Dichtungsbereichs (10) entsprechende Tiefe aufweist, wobei der erste Dichtungsbereich (10) und der zweite Dichtungsbereich (7)
komplementäre Formen vom Typ männlich-weiblich aufweisen, die es ihnen ermöglichen, ineinander zu passen, um es der Tablette (5) zu ermöglichen, perfekt auf die Kontaktfläche des ersten Dichtungsbereichs (10) zu passen, **dadurch gekennzeichnet, dass**:
- der erste Dichtungsbereich (10) aus einer ebenen Fläche (2) mit einer Breite (LP) und mindestens zwei Ausrundungen (3) mit den Radien R1 und R2 besteht,
- die Tablette (5) durch einen Metallring (6) auf dem Metallteil (4) gehalten wird, um die Beweglichkeit der Tablette (5) zu begrenzen und die Tablette (5) unter der Einwirkung von mechanischen und/oder vibrierenden Beanspruchungen praktisch stabil zu halten, und
- die Vorrichtung außerdem mindestens eine elastische Membran (8) mit einer Dreifachfunktion aufweist, wobei die elastische Membran (8) im Ausgangszustand elastisch vorverformt ist, weil sie auf einem metallischen Abstandshalter (9) in einem solchen Winkel (ALFA) angebracht ist, dass
der Befestigungspunkt der Membran an dem zweiten Metallteil (4) auf einer solchen Höhe (DE) liegt, dass eine Vorspannung (P) erhalten wird, die sich aus der Verformung ergibt, die durch eine Verschiebung der Membran (8) um die Höhe (DE) entlang der vertikalen Achse (OX) und den Winkel (ALFA) von weniger als 60 Grad verursacht wird, wobei die Vorspannung (P) proportional zu dem Winkel (ALFA) zwischen dem ersten Metallteil (A) und dem Mischteil (B) und größer oder gleich einer Kontaktkraft (EC) ist, die der Summe der äußeren Kräfte entspricht, die geeignet sind, die Dichtung zu brechen und/oder die Dichtungsbereiche (7) und (10) der Teile (A) bzw. (B) zufällig zu trennen.

2. Dichtungsvorrichtung nach Anspruch 1, **dadurch gekennzeichnet, dass** die elastische Membran (8) mit einer Dreifachfunktion eine flache und kreisförmige dünne Platte einer Dicke zwischen 0,01 mm und 2 mm ist, die flexibel, metallisch oder nichtmetallisch oder aus einem Verbundmaterial hergestellt ist und Öffnungen aufweist, die symmetrisch und/oder asymmetrisch in Bezug auf die vertikale Achse (OX) und/oder die horizontale Achse (OY) oder um die vertikale Achse (OX) und/oder die horizontale Achse (OY) herum in mindestens einem Muster (12, 13) angeordnet sind, das durch die Leistungsanforderungen der Vorrichtung vorgegeben ist.

3. Dichtungsvorrichtung nach einem der vorhergehenden Ansprüche, **dadurch gekennzeichnet, dass** die Einprägung des Dichtungsbereichs (7) und/oder die Tiefe des Dichtungsbereichs (10) zwischen 0,005 mm und 2 mm beträgt.

## Claims

1. Sealing device for a space valve or a fitting used in aeronautics or aerospace, comprising a vertical axis (OX), a horizontal axis (OY), an axis (OZ), a first metal part (A) having a first sealing zone (10) which has a depth (PA), a mixed part (B) consisting of at least two parts:
- a second metal part (4) and
- a PTFE pellet (5) comprising a second sealing zone (7) which comprises a recess with a shape matching the shape of the first sealing zone (10) and with a depth corresponding to that of the first sealing zone (10),
the first sealing zone (10) and the second sealing zone (7) have complementary male-female type shapes allowing them to fit into one another to allow the pellet (5) to perfectly match the contact surface of the first sealing zone (10), **characterized in that**:
- the first sealing zone (10) consists of a flat surface (2) having a width (LP) and of at least two fillets (3) having a radius R1 and R2,
- the pellet (5) is held on the metal part (4) by a metal ring (6) to limit the mobility of said pellet (5) and to keep said pellet (5) substantially stable under the effect of mechanical and/or vibratory stresses, and
- said device further comprises at least one elastic membrane (8) with a triple function, said elastic membrane (8) being elastically pre-deformed in the initial state because it is mounted on a metal spacer (9) at an angle (ALFA) such that the point of attachment of said membrane on said second metal part (4) is at a height (DE) making it possible to obtain a preload (P) resulting from the deformation caused by a displacement of the membrane (8) from said height (DE) along the vertical axis (OX) and from said angle (ALFA) less than 60 degrees, said preload (P) being proportional to said angle (ALFA) between the first metal part (A) and the mixed part (B) and greater than or equal to a contact force (EC) corresponding to the sum of the external forces liable to break the seal and/or accidentally separate said sealing zones (7) and (10) of parts (A) and (B) respectively.

2. Sealing device according to claim 1, **characterized in that** the elastic membrane (8) with a triple function is a flat, circular, thin sheet with a thickness of between 0.01 mm and 2 mm, and is flexible, metallic or non-metallic or made of composite material, comprising openings which are symmetrical and/or asymmetrical with respect to the vertical axis (OX) and/or the horizontal axis (OY) or around the vertical axis (OX) and/or horizontal axis (OY) according to at least one pattern (12, 13) predetermined by the performance constraints of the device.

3. Sealing device according to any of the preceding claims, **characterized in that** the recess of the sealing zone (7) and/or the depth of the sealing zone (10) is between 0.005 mm and 2 mm.
